(19) Europäisches Patentamt
European Patent Office
Office européen des brevets

(11) EP 2 389 040 A1

(12) EUROPEAN PATENT APPLICATION

(43) Date of publication:
23.11.2011 Bulletin 2011/47

(51) Int Cl.:
$H04W\ 72/12$ (2009.01)   $H04W\ 28/08$ (2009.01)

(21) Application number: 10305542.2

(22) Date of filing: 21.05.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(71) Applicant: Alcatel Lucent
75007 Paris (FR)

(72) Inventors:
• Proebster, Magnus
72127 Kusterdingen (DE)

• Müller, Christian
70806 Kornwestheim-Pattonville (DE)
• Bakker, Hajo
71735 Eberdingen (DE)
• Kaminski, Stephen
73054 Eislingen (DE)

(74) Representative: Kleinbub, Oliver et al
Alcatel-Lucent Deutschland AG
Intellectual Property & Standards
Lorenzstrasse 10
70435 Stuttgart (DE)

(54) **A method for monitoring and control of load in a communication network, and a base station therefor**

(57) The invention concerns a method for monitoring and control of load in a communication network comprising base stations and user terminals, wherein a base station uses weighting factors for scheduling user terminals to determine a load of the base station, the base station sends information about the load of the base station to at least one further base station, and the base station and the at least one further base station interact based on said information about the load of the base station, and a base station therefor.

Fig. 4

**Description**

**Field of the invention**

The invention relates to a method for monitoring and control of load in a communication network comprising base stations and user terminals, and a base station adapted to perform said method.

**Background**

The load of cellular wireless communications systems is defined as the fraction of the utilized and the total cell capacity. The underlying total cell capacity, which is hard to predict, is based on a practically determined maximum number of user terminals that can be served with a certain quality of service. Usually, the load of cellular wireless communications systems is determined in terms of one or more of the parameters bandwidth, resource usage, transmission power, power headroom and/or number of active user terminals.

**Summary**

One of these state of the art parameters alone is not sufficient to decide whether the system actually reaches its maximum system load. A high number of active users, for instance, does not unambiguously indicate a high system load situation, as the sum of load that is induced into the system is depending on additional parameters, such as e.g. the actual offered traffic and the availability of transmit power, often also referred to as the so-called power headroom. Apart from that, when only considering the amount of allocated resources, a single user using all of the available bandwidth would mean that the cell is fully loaded, which is not reasonable.

Besides the parameters mentioned above, it is necessary to determine whether the Quality of Service requirements of the users' data flows can be satisfied. So far, there is no solution which combines all these parameters in a single scalar cell load value.

Furthermore, the existing solution does not account for cell individual and service-specific boundary conditions which vary among cells and services. Consequently, the corresponding capacity cannot be unambiguously derived from these parameters.

The object of the invention is thus to provide an easy method for the determination of the current load in a cell of a cellular wireless communications system with a reliable metric preferably with a single scalar cell load value.

The basic idea of the invention is to use the user terminal specific so-called token counters (TC), i.e. weighting factors for scheduling of user terminals, for the purpose of system load monitoring. A token counter is used to ensure a minimum bit rate (MBR) for each user terminal, i.e. an operator can ensure a minimum degree of service to all user terminals.

The token counters of the user terminals are internally forwarded in a base station to a token counter load monitoring function for processing of the cell load. The output of the token counter load monitoring function can be used e.g. by the base station internal connection admission control or for the communication between base stations for load indication and load balancing functions.

In the following, a general behavior of a token counter is described, and the detailed description of a token counter is given below in the description of the embodiments.

For each time interval or time slot, as e.g. a 1 ms transmission time interval (TTI) in the standard Third Generation Partnership Project Long Term Evolution (3GPP LTE), a scheduler allocates resources to a user terminal, as e.g. physical resource blocks (PRB) in LTE, which can be interpreted as a bit rate.

When a user terminal gets allocated a bit rate below its required minimum bit rate, the token counter grows in this time slot. On the other hand, if the user terminal gets allocated a bit rate above its required minimum bit rate, the token counter decreases in this time slot. The token counter (TC) is limited between $0 < TC < $ maximum value. Therefore, the distribution of user terminal specific token counters in a cell provides a good indication of the load relative to the effective capacity of the cell. The actual value of the cell capacity is not needed because the token counter reflects the grade to which user terminal demands can be satisfied.

In case of a cell overload, i.e. when many user terminals can no longer be served with the required minimum bit rate, the token counter of said user terminals will increase.

In case of an empty user terminal buffer, i.e. if there is no need to schedule said user terminal, the token counter values of said user terminal will preferably not be taken into account by the token counter load monitoring function.

The calculation of token counters can be part of the base station scheduler or implemented as a specific token counter software module inside the base station in case the scheduler algorithm does not support a token counter mechanism.

In the latter case, the required input parameters, i.e. the user terminal bit rate calculated from the scheduled data stored within the base station buffer, are provided by the scheduler to the token counter software module.

Thus, the object is achieved by a method for monitoring and control of load in a communication network comprising base stations and user terminals, wherein a base station uses weighting factors for scheduling user terminals to determine a load of the base station, the base station sends information about the load of the base station to at least one further network element, as e.g. a further base station or a centralized network supervision element for control or coordination of base stations, and the base station and the at least one further network element interact based on said information about the load of the base station.

The object is furthermore achieved by a base station for monitoring and control of load in a communication network, said base station comprising at least one processing means adapted to use weighting factors for scheduling user terminals to determine a load of the base station, send information about the load of the base station to at least one further network element, and interact with the at least one further network element based on said information about the load of the base station.

The invention is described in the following within the framework of 3GPP LTE. However, as the invention is not restricted to 3GPP LTE, but can in principle be applied in other networks that can exploit weighting factors for scheduling user terminals to determine a load of the base station, like e.g. in WiMAX networks (WiMAX = Worldwide Interoperability for Microwave Access), in the following, instead of the term eNodeB, the more general term base station is used.

Further developments of the invention can be gathered from the dependent claims and the following description.

## Brief description of the figures

In the following the invention will be explained further making reference to the attached drawings.

Fig. 1 schematically shows a communication network in which the invention can be implemented.

Fig. 2 schematically shows the structure of a user terminal and a base station in which the invention can be implemented.

Fig. 3 schematically shows exemplarily simulations for the probability density function dependent on a value for the token counter for a low load and a high load case.

Fig. 4 schematically shows exemplarily the usage of token counters calculated in the base station scheduler for a base station internal admission control, or for load balancing or for coordinated multipoint reception or transmission in interaction between different base stations according to an embodiment of the invention.

Fig. 5 schematically shows exemplarily the usage of token counters calculated in a specific software module for a base station internal admission control, or for load balancing or for coordinated multipoint reception or transmission in interaction between different base stations according to an embodiment of the invention.

## Description of the embodiments

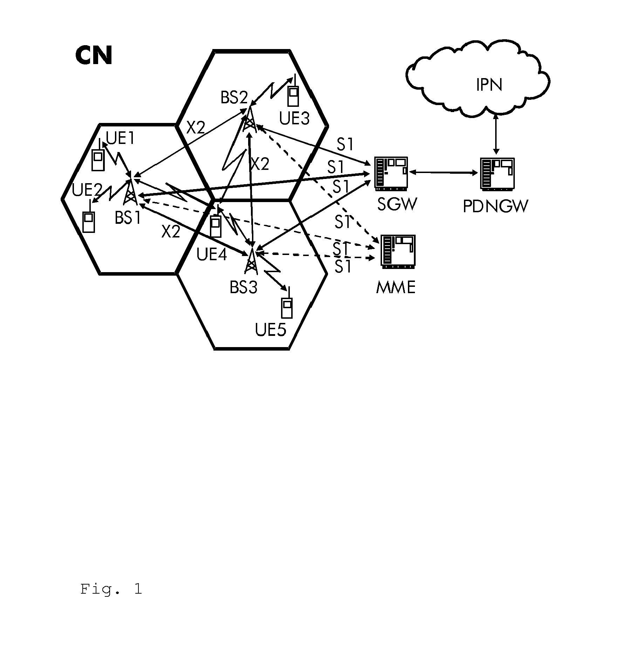

Fig. 1 shows as an example of a communication network CN in which the invention can be implemented according to the standard 3GPP LTE.

Said communication network CN comprises base stations BS1-BS3, user terminals UE1-UE5, a serving gateway SGW, a packet data network gateway PDNGW, and a mobility management entity MME.

Each of said user terminals UE1-UE5 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. an eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard in order to transfer the user plane signal and the control plane signal during handover, and in order to perform coordinated multipoint (CoMP) reception or transmission. For coordinated multipoint reception in uplink, base stations BS1-BS3 in the coordination area or group transfer the data which they received at their respective air interface to a coordinating device, e.g. to a master base station BS3 or to an external coordinated multi-point coordinating device which is not shown in fig. 1, preferably via the so-called X2 interface, i.e. via the backhaul, for evaluation of the data from the different base stations BS1-BS3.

For coordinated multipoint transmission in downlink, two different approaches are under consideration: Coordinated scheduling, or Coordinated Beamforming (CBF), and Joint Processing/Joint Transmission (JP/JT). For coordinated scheduling, the transmission to a user terminal is performed from the serving base station, exactly as in the case of non-CoMP transmission. However, the scheduling, including any beamforming functionality, is dynamically coordinated between the base stations (BS1-BS3) in order to control and/or reduce the interference between different transmissions. In principle, the transmitter beams are constructed to reduce the interference to other neighboring user terminals, while increasing the served user's signal strength. In order to coordinate the transmission in the different base stations BS1-BS3, scheduling information are exchanged between the different base stations BS1-BS3 preferably via the so-called X2 interface, i.e. via the backhaul. For JP/JT, the transmission to a user terminal is simultaneously performed from multiple transmission points, e.g. base stations, across cell sites. The multi-point transmissions will be coordinated as a single transmitter with antennas that are geographically separated. This scheme has the potential for higher performance, compared to coordination only in the scheduling, but comes at the expense of more stringent requirement on backhaul communication, as user data to be transmitted must be transmitted to the multiple transmission points real-time preferably via the so-called X2 interface, i.e. via the backhaul.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal UE1-UE5 and the respective serving base station BS1-BS3.

The mobility management entity MME performs tasks of the subscriber management and the session management, and also performs the mobility management during handover between different access networks.

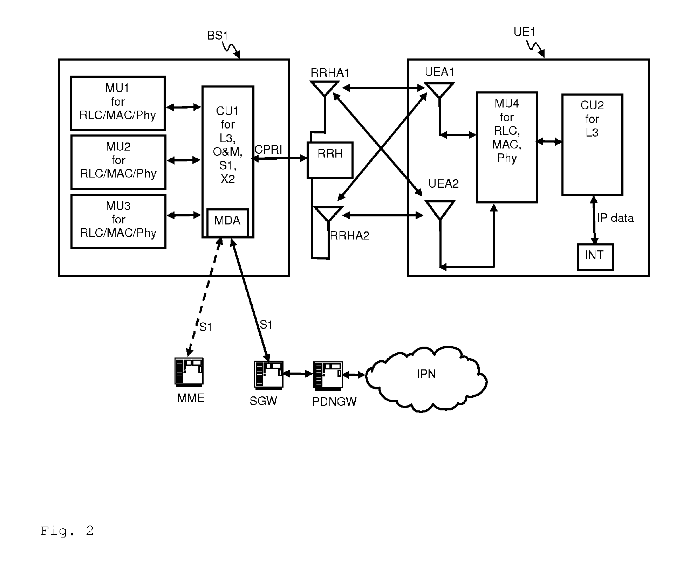

Fig. 2 schematically shows the structure of a user terminal UE1 and a base station BS1 in which the invention can be implemented.

The base station BS1 comprises by way of example three modem unit boards MU1-MU3 and a control unit board CU1, which in turn comprises a media dependent adapter MDA.

The three modem unit boards MU1-MU3 are connected to the control unit board CU1, and the control unit board CU1 is in turn connected to a remote radio head RRH via a so-called Common Public Radio Interface (CPRI).

The remote radio head RRH is connected by way of example to two remote radio head antennas RRHA1 and RRHA2 for transmission and reception of data via a radio interface.

The media dependent adapter MDA is connected to the mobility management entity MME and to the serving gateway SGW and thus to the packet data network gateway PDNGW, which is in turn connected to the external IP network IPN.

The user terminal UE1 comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), switches and memories, like e.g. Double Data Rate Synchronous Dynamic Random Access Memories (DDR-SDRAM) in order to be enabled to perform the tasks described above.

The remote radio head RRH comprises the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS1 on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 via the control unit board CU over the Common Public Radio Interface to the remote radio head and the respective remote radio head antenna RRHA1, RRHA2 for transmission over an air interface.

The Common Public Radio Interface (CPRI) allows the use of a distributed architecture where base stations BS1, containing the so-called radio equipment control, are connected to remote radio heads RRH preferably via lossless fibre links that carry the CPRI data. This architecture reduces costs for service providers because only the remote radio heads RRH containing the so-called radio equipment, like e.g. amplifiers, need to be situated in environmentally challenging locations. The base stations BS1 can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE1 to the external IP network IPN.

In the following, a description of an exemplary scheduling algorithm, implemented e.g. in a scheduler in a base station, using so-called token counters as weighting factors for scheduling of user terminals is given.

The exemplary scheduling algorithm which was chosen is the so-called Alpha-fair scheduler, which is an algorithm combining the properties and parameters of a conventional proportional fair (PF) algorithm with $\alpha$-fairness and a token counter to ensure a minimum bit rate (MBR) for all users.

The scheduler in the base station allocates physical resource blocks (PRBs) to different user terminals according to their scheduling weight $W_{UE}$ for the respective physical resource block. These weights $W_{UE}$ are calculated according to the following the formula:

$$W_{UE} = \frac{r}{\bar{r}^{\alpha}} \cdot \exp\left(\frac{tc}{tc_{norm}}\right)$$

The factor $\dfrac{r}{\bar{r}^{\alpha}}$ represents the proportional fair mechanism, and the factor $\exp\left(\dfrac{tc}{tc_{norm}}\right)$ represents the token counter mecha-nism.

In the formula above, $r$ is the rate estimate for the respective user terminal in the current physical resource block, $\bar{r}^{\alpha}$ is the moving average of recent rates per physical resource block of this user terminal, and $\alpha$ is a selectable parameter controlling the fairness of the proportional fair part of the scheduling algorithm. $\bar{r}$ is calculated from the following formula:

$$\bar{r}(t) = \beta \cdot \bar{r}(t-1) + (1-\beta) \cdot \frac{1}{N} \sum_{n=0}^{N-1} r_n$$

In this formula, $\beta$ is the forgetting factor, $N$ is the number of physical resource blocks assigned to the user terminal and $r_n$ is the rate estimate for the respective physical resource blocks. If a user terminal has not been scheduled in the actual slot, the second term is set to zero.

The value for the token counter tc in the equation above is obtained according to the following formula:

$$tc(t) = tc(t-1) + MBR \cdot t_{TTI} - \sum_{n=0}^{N-1} r_n$$

MBR is the adjustable required minimum bit rate. When a user terminal is allocated a rate below his required minimum bit rate, the token counter grows in this slot. On the other hand, if the user gets more than the minimum bit rate, the token counter decreases again. The token counter is limited between $0 < tc < tc_{max}$. If a user terminal is allocated a rate below the required minimum bit rate, the scheduling weight increases with the exponential function, and the user terminal will be scheduled more often. The factor $tc_{norm}$ in the equation above adjusts the slope of the exponential factor

$$\exp\left(\frac{tc}{tc_{norm}}\right),$$   , and also affects the relation between the two combined scheduling mechanisms.

In the equation for the token counter $tc$ given above, the value of the token counter $tc$ is basically dependent on a difference between the required minimum bit rate $MBR$ and the current bit rate $\sum_{n=0}^{N-1} r_n \Big/ t_{TTI}$ of the user terminal.

However, in order to use the token counter as a weighting factor for scheduling user terminals, the token counter $tc$ could alternatively also be dependent on a ratio of the required minimum bit rate $MBR$ and the current bit rate $\sum_{n=0}^{N-1} r_n \Big/ t_{TTI}$ of the user terminal calculated according to the following equation:

$$tc(t) = tc(t-1) \cdot \frac{MBR \cdot t_{TTI}}{\sum_{n=0}^{N-1} r_n}$$

In case a user terminal is not scheduled, the ratio $\dfrac{MBR \cdot t_{TTI}}{\sum_{n=0}^{N-1} r_n}$ is replaced by a predefined upper limit in order to avoid that $tc = tc_{max}$ after one iteration.

In the following, a short outline of the influence of the mentioned parameters on the scheduling behaviour is given.

The parameter $\alpha$ controls the level of fairness introduced by the proportional fairness term. With $\alpha$, it is possible to tune the fairness behaviour between a maximum carrier to interference ratio ($\alpha =0$) mechanism on the one side and a scheduling policy giving an equal rate to all users ($\alpha \rightarrow$infinity) on the other side. Generally, a large $\alpha$ increases the fairness and decreases the flexibility of the scheduling decision.

The value of the parameter $\alpha$ also affects the relation between the proportional fairness and the token counter part of the scheduler because it influences the weights of the proportional fairness terms.

The value of the parameter β, sometimes also termed "forgetting factor" controls the reactivity of the moving average on the user terminal's history of channel conditions. If β is large, the moving average will only adapt slowly to changes in the channel conditions and ignore short term fluctuations.

On the other hand, if β is small, it will follow the current state more quickly. The trade-off is to recognize when the channel is better than its average on the one hand and on the other side to react quickly enough under changing traffic load. This influences especially the robustness in presence of On/Off-traffic.

The most important parameter for the token counter mechanism is the required minimum bit rate *MBR*. A user terminal will always receive this rate, because otherwise the token counter grows and strongly increases the scheduling weight of this user. In the equation for the token counter given above, the minimum bit rate *MBR* is multiplied with the period of time of a transmission time *interval* $t_{TTI}$ to be able to compare it with the data bits allocated to the user in this subframe. It is important to state that the requirement of the minimum bit rate does not need to be met in each transmission time interval $t_{TTI'}$ but in the long term. This flexibility is important to be able to exploit the diversity in the channel conditions of different user terminals in order to increase the total cell capacity.

The parameter $tc_{norm}$ controls the strictness of the requirement of the minimum bit rate *MBR* in time. If it is large, the token counter tc will have a reduced impact on the overall scheduling weight. Furthermore, the slope of the exponential function is reduced and the token counter will be less stringent for the short term.

The maximum impact of the token counter on the scheduling weight is given by $tc_{norm}$ and $tc_{max}$.

According to an aspect of the invention, the token counters *tc* as described above, i.e. weighting factors for scheduling user terminals, are used to determine a load of the base station.

As already mentioned above, if a user terminal gets allocated a bit rate below its required minimum bit rate, the token counter tc grows in this time slot. On the other hand, if the user terminal gets allocated a bit rate above its required minimum bit rate, the token counter *tc* decreases in this time slot. The token counter is limited between 0 < TC < maximum value. Therefore, the token counter provides a good indication of the load relative to the effective capacity of the cell. The actual value of the cell capacity is not needed because the token counter reflects the grade to which user terminal demands can be satisfied.

In the following, it is exemplarily described, how the load of a base station is related to the distribution of values of token counters *tc*.

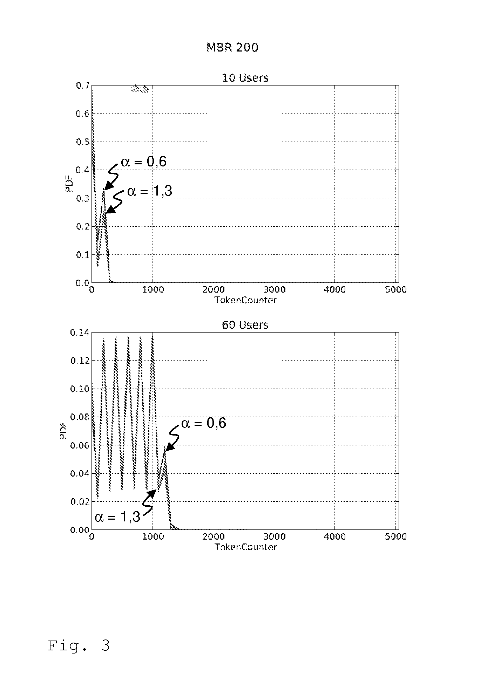

Fig. 3 schematically shows exemplarily simulations for the probability density function dependent on a value for the token counter *tc* for a low load case with 10 user terminals and a high load case with 60 user terminals. The required minimum bit rate *MBR* for both cases is 200kbps. The distribution of the token counters for all user terminals served by the base station, i.e. for 10 user terminals in the low load case and for 60 user terminals in the high load case, is considered.

In the upper part of fig. 3, the probability density function is depicted for α =0,6 and for α=1,3 against the token counter value for the low load case.

As can be seen in the upper diagram in fig. 3, the distribution of token counters in the low load case is close to zero.

In the lower part of fig. 3, the probability density function is depicted for α=0,6 and for α=1,3 against the token counter value for the high load case.

As described above, in case of a high load case when many user terminals can no longer be served with the required minimum bit rate, the token counters of said user terminals will increase.

As can be seen in the lower diagram in fig. 3, the distribution of token counters in the high load case is high up to a predefined maximum value $tc_{max}$ of the token counters.

In order to use the distribution of token counters as a load indication, a threshold for a quantile of a distribution of said token counters, i.e. weighting factors for scheduling of user terminals, is defined above which the base station is in overload.

If e.g. as a threshold for a quantile $Q_{0,5}$, i.e. for a value of the token counter below which 50% of all token counters lie, a value of 300 is defined, it can be seen in fig. 3, that in the low load case, the quantile $Q_{0,5}$ is below 300, whereas in the high load case, the quantile $Q_{0,5}$ is above 300. Thus, the latter high load case would be identified as an overload situation.

In an embodiment of the invention, more than one threshold for a quantile can be defined in order to have a measure for gradually increasing load which can be represented by different load indicators.

In another embodiment, simply a threshold for the value of the probability density function at a dedicated value of the token counter is defined, above which the base station is in overload. In an alternative of the embodiment, more than one threshold for the value of the probability density function at a dedicated value of the token counter can be defined in order to have a measure for gradually increasing load which can be represented by different load indicators.

If e.g. a value of 0,02 as a threshold for the value of the probability density function at a value of the token counter of *tc*=1000 is defined, it can be seen in fig. 3, that in the low load case, the value of the probability density function at tc=1000 is close to zero, whereas in the high load case, the value of the probability density function at *tc*=1000 is high above 0,02. Thus, the latter high load case would be identified as an overload situation.

Thus the distribution of the token counters can be used as a load indication, e.g. to define an overload situation.

By means of using token counters for load monitoring and control, a reliable detection of overload situations is possible. Furthermore, no additional overhead in terms of additional processing costs or additional measurement capabilities are needed.

According to a further aspect of the invention, the base stations sends information about the load of the base station to at least one further base station, and said at least one further base station interacts with the base station based on said information about the load of the base station.

For example, in so-called self organizing networks (SON), by means of applying load balancing between the base station and the at least one further base station based on the information about the load of the base station, capacity-based optimization between the different base stations in congestion situations and fair bandwidth distribution among user terminals can be achieved, and especially overload situations, leading to bandwidth degradation per user terminal, can be minimized. By means of applying load balancing in self organizing networks, improvements can be achieved in real-time.

Furthermore, the at least one further base station may use the information about the load of the base station e.g. to decide whether it will accept or reject a request of the base station to join coordinated multipoint transmission or reception as described above under fig. 1.

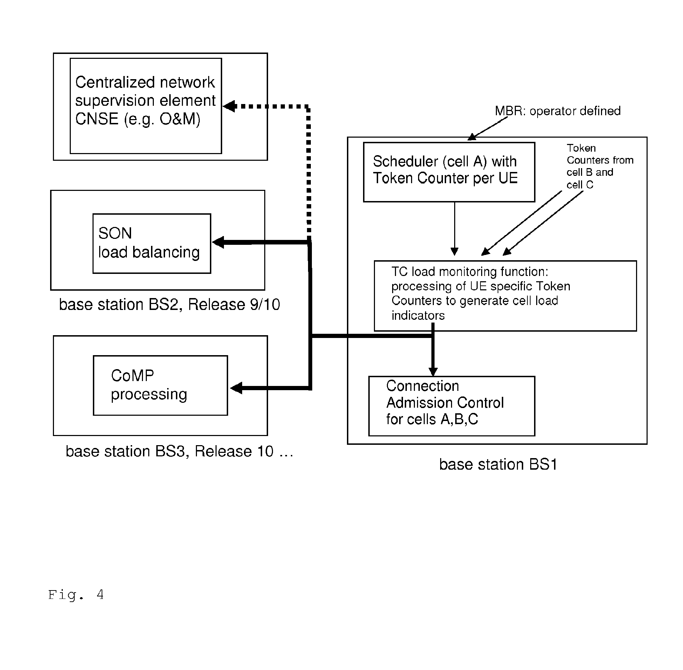

Fig. 4 schematically shows exemplarily the usage of token counters calculated in the base station scheduler for a base station internal admission control, or for load balancing or for coordinated multipoint reception or transmission in interaction between different base stations according to an embodiment of the invention.

A base station BS1 is connected e.g. via X2 interfaces as described above in fig. 1 with two further base stations BS2 and BS3.

The base station BS1 comprises a base station scheduler for each served cell A, B and C which comprises a module to calculate token counters for the user terminals based on an operator-defined required minimum bit rate MBR as described above.

The user terminal specific token counters of cells A, B and C are transmitted to a token counter load monitoring function in which the token counters are used to determine the load of the cells A, B, and C as described above under fig. 3. Alternatively, a common average load of the base station BS1 can be determined taking into account all token counters of cells A, B, and C in order to determine one common average load.

The token counters are processed to indicate the load with respect to a certain time. The processing may preferably generate averages for the token counters over several user terminals, service classes and over some time. Algorithms to generate such average values are e.g. the so-called sliding window averaging, low pass filtering, linear averaging.

Preferably, in a further processing step, the token counters are normalized to the predefined radio cell individual maximum token counter value. The resulting value is a number between 0 and 1 and has no unit. This system load indication can then be easily exchanged with other base stations within the cellular wireless communications network.

The information about the load of the cells A, B, and C is used in the base station BS1 to perform an admission control for user terminals requiring admission to one of the cells A, B and C.

The information about the load of the cells A, B, and C is furthermore transmitted to the base station BS2, e.g. via the X2 interface, in which load balancing as described above within the framework of a self organizing network can be performed.

If e.g. all cells A, B and C are in overload, and the base station BS2 receives information about this overload situation from the base station BS1, e.g. in the form of load indicators, the base station BS2 can decide to lend some radio resources, i.e. subcarriers to the base station BS1.

The base station BS2 can e.g. be an enhanced NodeB working according to the standard 3GPP LTE Release 9 or 10.

The information about the load of the cells A, B, and C is furthermore transmitted to the base station BS3, e.g. via the X2 interface, in which coordinated multipoint reception or transmission as described above can be performed.

If e.g. all cells A, B and C are in overload or have a high load indicator, and the base station BS3 receives information about this overload situation from the base station BS1, e.g. in the form of load indicators, the base station BS3 can decide to reject a request from the base station BS1 to join coordinated multipoint transmission or reception if the base station BS3 has not enough capacity to handle the high additional load.

The base station BS3 can e.g. be an enhanced NodeB working according to the standard 3GPP LTE Release 10 or higher.

In a variation of the embodiment, information about the load of the cells A, B, and C is transmitted to a centralized network supervision element CNSE, e.g. Operation and Maintenance O&M, in which e.g. load balancing or coordinated multipoint reception or transmission of the base stations BS1-BS3 as described above can be coordinated or controlled.

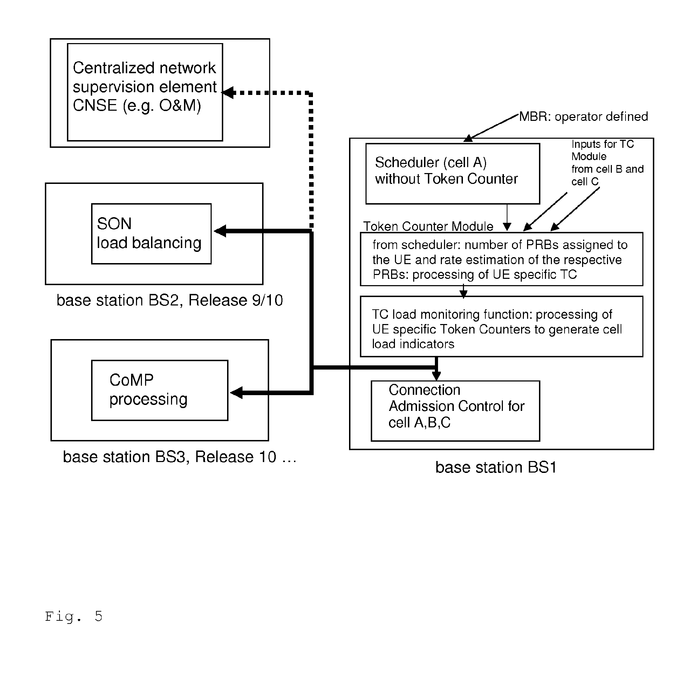

Fig. 5 schematically shows exemplarily the usage of token counters calculated in a specific software module, the token counter module, for a base station internal admission control, or for load balancing or for coordinated multipoint reception or transmission in interaction between different base stations according to an embodiment of the invention.

The usage of the token counters in fig. 5 basically corresponds to the usage of the token counters as depicted in fig. 4, so that in the following only the differences compared to fig. 4 are described.

The base station BS1 comprises a base station scheduler for each served cell A, B and C. The schedulers transmit for each user terminal the number of physical resource blocks assigned to the respective user terminal and the rate estimation related to the respective physical resource blocks to the token counter module.

In the token counter module, the user specific token counters for the user terminals are calculated based on an operator-defined required minimum bit rate MBR as described above.

The user terminal specific token counters of cells A, B and C are transmitted from the token counter module to a token counter load monitoring function, and the further processing and usage of information about the load in the base station BS1 is as described above under fig. 4.

In the embodiment of the invention, the token counter module and the token counter load monitoring function can be for example the baseband processing unit that controls the physical layer, MAC layer and potentially higher layers like the RLC layer for one or more radio cells.

**Claims**

1. A method for monitoring and control of load in a communication network comprising base stations (BS1, BS2, BS3) and user terminals (UE1-UE5), **characterized in, that**

   • a base station (BS1) uses weighting factors for scheduling user terminals (UE1, UE2) to determine a load of the base station (BS1),
   • the base station (BS1) sends information about the load of the base station (BS1) to at least one further network element (BS2, BS3, CNSE),
   • and the base station (BS1) and the at least one further network element (BS2, BS3, CNSE) interact based on said information about the load of the base station (BS1).

2. A method according to claim 1, **characterized in, that** said weighting factors for scheduling said user terminals (UE1, UE2) are dependent on a relation of a required minimum bit rate to a transmission bit rate of the different user terminals (UE1, UE2).

3. A method according to claim 1 or 2, **characterized in, that** said weighting factors for scheduling said user terminals (UE1, UE2) are dependent on a difference between the required minimum bit rate and the transmission bit rate of the different user terminals (UE1, UE2), or dependent on a ratio of the required minimum bit rate and the transmission bit rate of the different user terminals (UE1, UE2) .

4. A method according to any of the preceding claims, **characterized in, that** said weighting factors for scheduling said user terminals (UE1, UE2) are increasing for user terminals with a transmission bit rate below the required minimum bit rate, and decreasing for user terminals with a transmission bit rate above the required minimum bit rate.

5. A method according to any of the preceding claims, **characterized in, that** the base station (BS1) and the at least one further network element (BS2, BS3, CNSE) decide on a load distribution between the base station (BS1) and the at least one further network element (BS2, BS3, CNSE) based on said information about the load of the base station (BS1).

6. A method according to any of the preceding claims, **characterized in, that** a threshold for a quantile of a distribution of said weighting factors is defined above which the base station (BS1) is in overload.

7. A method according to any of the preceding claims, **characterized in, that** the base station (BS1) performs an admission control for user terminals requiring admission to a cell which is served by said base station (BS1).

8. A method according to any of the preceding claims, **characterized in, that** the at least one further network element (BS2, BS3, CNSE) decides on participation in coordinated multi-point transmission or reception based on said information about the load of the base station (BS1).

9. A method according to any of the preceding claims, **characterized in, that** said weighting factors for scheduling said user terminals (UE1, UE2) are updated in time intervals.

**10.** A method according to any of the preceding claims, **characterized in, that** said at least one further network element (BS2, BS3, CNSE) is at least one of the group of at least one base station (BS2, BS3) and at least one centralized network supervision element (CNSE) for coordination of base stations.

**11.** A base station (BS1) for monitoring and control of load in a communication network, said base station (BS1) comprising at least one processing means adapted to

• use weighting factors for scheduling user terminals (UE1, UE2) to determine a load of the base station (BS1),
• send information about the load of the base station (BS1) to at least one further network element (BS2, BS3, CNSE),
• and interact with the at least one further network element (BS2, BS3, CNSE) based on said information about the load of the base station (BS1).

**12.** A communication network (CN) comprising at least one base station (BS1) according to claim 11 and at least one user terminal (UE1-UE5) .

**CN**

Fig. 1

Fig. 2

MBR 200

Fig. 3

Fig. 4

Centralized network
supervision element
CNSE (e.g. O&M)

MBR: operator defined

Inputs for TC
Module
from cell B and
cell C

Scheduler (cell A)
without Token Counter

Token Counter Module

from scheduler: number of PRBs assigned to
the UE and rate estimation of the respective
PRBs: processing of UE specific TC

SON
load balancing

base station BS2, Release 9/10

TC load monitoring function: processing of
UE specific Token Counters to generate cell
load indicators

CoMP
processing

Connection
Admission Control for
cell A,B,C

base station BS3, Release 10 …

base station BS1

Fig. 5

**EUROPEAN SEARCH REPORT**

Application Number

EP 10 30 5542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2008/233967 A1 (MONTOJO JUAN [US] ET AL) 25 September 2008 (2008-09-25) <br> * paragraph [0073] * <br> * figure 2a * <br> ----- | 1-12 | INV. H04W72/12 <br><br> ADD. H04W28/08 |
| Y | EP 1 469 641 A2 (LUCENT TECHNOLOGIES INC [US]) 20 October 2004 (2004-10-20) <br> * paragraph [0027] - paragraph [0028] * <br> * paragraphs [0040], [0050] * <br> * paragraph [0054] - paragraph [0059] * <br> * paragraph [0068] - paragraph [0070] * <br> ----- | 1-12 | |
| A | WO 02/49237 A2 (ERICSSON TELEFON AB L M [SE]) 20 June 2002 (2002-06-20) <br> * page 5, line 12 - line 27 * <br> ----- | 1,6,11 | |
| A | US 2005/053046 A1 (WANG SHIWEI [TW]) 10 March 2005 (2005-03-10) <br> * claims 1-3 * <br> ----- | 5,7,10 | |

TECHNICAL FIELDS SEARCHED (IPC)

H04W

The present search report has been drawn up for all claims

| Place of search | Date of completion of the search | Examiner |
|---|---|---|
| Munich | 28 October 2010 | Schorgg, Alfred |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 30 5542

This annex lists the patent family members relating to the patent documents cited in  the above-mentioned European search report.
The members are as contained in the European Patent Office EDP file on
The European Patent Office is in no way liable for these particulars which are merely given for the purpose of information.

28-10-2010

| Patent document<br>cited in search report | | Publication<br>date | Patent family<br>member(s) | | Publication<br>date |
|---|---|---|---|---|---|
| US 2008233967 | A1 | 25-09-2008 | CA<br>CN<br>EP<br>JP<br>KR<br>WO | 2679349 A1<br>101641918 A<br>2130335 A1<br>2010522516 T<br>20090132625 A<br>2008118810 A1 | 02-10-2008<br>03-02-2010<br>09-12-2009<br>01-07-2010<br>30-12-2009<br>02-10-2008 |
| EP 1469641 | A2 | 20-10-2004 | DE 602004011347 T2<br>JP 2004320775 A<br>KR 20040090442 A<br>US 2004208183 A1 | | 15-01-2009<br>11-11-2004<br>25-10-2004<br>21-10-2004 |
| WO 0249237 | A2 | 20-06-2002 | AU<br>CN<br>EP | 1654202 A<br>1481622 A<br>1342327 A2 | 24-06-2002<br>10-03-2004<br>10-09-2003 |
| US 2005053046 | A1 | 10-03-2005 | US | 2005174943 A1 | 11-08-2005 |

EPO FORM P0459

For more details about this annex : see Official Journal of the European Patent Office, No. 12/82